Europäisches Patentamt

European Patent Office

Office européen des brevets

(11) Veröffentlichungsnummer: **0 318 705 B1**

(19)

## (12) EUROPÄISCHE PATENTSCHRIFT

(45) Veröffentlichungstag der Patentschrift: **30.09.92**

(21) Anmeldenummer: **88118116.8**

(22) Anmeldetag: **31.10.88**

(51) Int. Cl.⁵: **G01N 30/16**, G01N 30/18

(54) **Probenaufgabe- bzw. -entnahmekopf für Gas oder Flüssigkeit.**

(30) Priorität: **28.11.87 DE 8715782 U**

(43) Veröffentlichungstag der Anmeldung:
**07.06.89 Patentblatt 89/23**

(45) Bekanntmachung des Hinweises auf die
Patenterteilung:
**30.09.92 Patentblatt 92/40**

(84) Benannte Vertragsstaaten:
**CH DE ES FR GB IT LI NL**

(56) Entgegenhaltungen:
**DE-A- 2 026 329**
**DE-A- 2 604 166**
**DE-A- 3 400 458**
**DE-U- 8 715 782**

(73) Patentinhaber: **Gerstel, Eberhard**
**Heerstrasse 4**
**W-4330 Mülheim a.d. Ruhr 14(DE)**

(72) Erfinder: **Gerstel, Eberhard**
**Heerstrasse 4**
**W-4330 Mülheim a.d. Ruhr 14(DE)**

(74) Vertreter: **Sparing Röhl Henseler Patentan-**
**wälte European Patent Attorneys**
**Rethelstrasse 123**
**W-4000 Düsseldorf 1(DE)**

Rank Xerox (UK) Business Services

EP 0 318 705 B1

## Beschreibung

Die Erfindung betrifft einen Probenaufgabe- bzw. -entnahmekopf für Gas oder Flüssigkeit, insbesondere für die Gaschromatographie, mit einer Innenbohrung, die vorzugsweise mit einer Bohrung eines Einführungsteils für eine Injektionsnadel fluchtet, wobei das Einführungteil über einen Dichtungskörper mit dem Kopf verbunden ist, sowie mit einem Eingabeventil, das einen Ventilkörper aufweist, der gegen die Innenbohrung abdichtend federvorgespannt, durch die Injektionsnadel zum Öffnen und unter einem Winkel im Bereich von über 90° bis unter 180°, vorzugsweise im Bereich von 120° bis 150°, insbesondere etwa 135°, in Einstechrichtung der Injektionsnadel gesehen, verschiebbar ist.

Aus der DE-A 3 400 458 ist ein derartiger Probenaufgabekopf für die Kapillargaschromatographie bekannt, bei dem ein Eingabeventil vorgesehen ist, das als Ventilkörper eine Kugel besitzt, die gegen einen Dichtungsring federvorgespannt ist. Der kugelförmige Ventilkörper wird zur Probenaufgabe durch eine Injektionsnadel gegen die Federvorspannung schräg seitlich weggedrückt, wobei die Injektionsnadel durch den Dichtungsring hindurch eingeführt wird. Hierbei besteht jedoch die Gefahr, daß der Dichtungsring beschädigt wird. Außerdem wird der Dichtungsring durch das Einspannen zwischen Ventilgehäuse und Kopf unrund, so daß die Anpreßkraft des kugelförmigen Ventilkörpers relativ groß sein muß, um eine Linienauflage des kugelförmigen Ventilkörpers zu gewährleisten. Hierdurch wird das Ventil schwergängig. Außerdem ist die Justierung der Kugel und des Ventilgehäuses, das einen Durchtritt für die Injektionsnadel aufweisen muß, schwierig, und eine entsprechende Bearbeitung ist erforderlich.

Aufgabe der Erfindung ist es, einen Probenaufgabe- bzw. -entnahmekopf für Gas oder Flüssigkeit zu schaffen, bei dem eine Beschädigung der Dichtung des Eingabeventils beim Einführen der Injektionsnadel verhindert wird, das leichtgängig und einfach zu montieren ist.

Diese Aufgabe wird dadurch gelöst, daß eine Führung für den zylindrisch ausgebildeten Ventilkörper vorgesehen ist, wobei die Führung in einer sich über den Bereich der Innenbohrung erstreckenden, hierzu koaxialen Ausnehmung des Kopfes mündet und der Ventilkörper einen Fortsatz besitzt, der eine schräg zur Innenbohrung verlaufende Stirnfläche sowie eine ringförmige, gegenüber der Stirnfläche zurückversetzt angeordnete Dichtfläche aufweist und in der Schließstellung des Eingabeventils unter Anlage der ringförmigen Dichtfläche an einer ringförmigen Anlagefläche in die Ausnehmung ragt.

Infolge der schräg zur Innenbohrung angeordneten Stirnfläche des Fortsatzes des Ventilkörpers kann dieser durch die Injektionsnadel leicht entgegen seiner Federvorspannung zum Öffnen des Eingabeventils in seiner Führung verschoben werden, ohne daß die Gefahr einer Beschädigung einer Dichtung oder Dichtfläche besteht. Gleichzeitig sichert diese Konstruktion die Leichtgängigkeit des Ventils sowie eine einfache Montage. Die konstruktionsmäßig einfache Ausführung ermöglicht es auch, den Kopf als auch die wesentlichen Teile des Ventils als Kunststoffspritzteile herzustellen, wobei keine besondere Bearbeitung oder Justierung beim Zusammenbau erforderlich ist. Da der Dichtungsring mit dem Ventilkörper bei Einführen der Injektionsnadel aus deren Weg herausgedrückt wird, ist eine Beschädigung des Dichtungsrings ausgeschlossen. Die zur Abdichtung erforderliche Anpreßkraft ist relativ gering.

Der Fortsatz des Ventilkörpers, der sich in die die Innenbohrung kreuzende Ausnehmung erstreckt, besitzt vorzugsweise ein relativ großes Spiel zur Ausnehmung, damit er beim Herausnehmen des Ventils aus dem Kopf nicht klemmt und sich der Ventilkörper einfach entnehmen läßt. Gegebenenfalls kann der Ventilkörper aber auch eine Bohrung aufweisen, über die er mittels eines entsprechenden Werkzeugs gezogen werden kann.

Der Kopf bildet vorzugsweise zugleich das Gehäuse für das Ventil und enthält eine Bohrung als Führung für den Ventilkörper, die außenseitig durch einen Stopfen verschlossen ist, an dem sich die Vorspannfeder für den Ventilkörper abstützt.

Der Kopf läßt sich allgemein zur Probenaufgabe bzw. -entnahme von Gas oder Flüssigkeit verwenden, und zwar insbesondere als Aufgabekopf für ein Kaltaufgabesystem für die Gaschromatographie oder als Kopf für eine beispielsweise bei der Gaschromatographie als Falle verwendeten Flasche, Behälter oder dergleichen.

Die Erfindung wird nachstehend anhand der in den beigefügten Abbildungen dargestellten Ausführungsbeispiele näher erläutert.

Fig. 1 zeigt im Schnitt einen septumfreien Probenaufgabekopf für die Kapillargaschromatographie.

Fig. 2 zeigt in verkleinertem Maßstab eine Ansicht entsprechend dem Pfeil X von Fig. 1.

Fig. 3 zeigt im Schnitt eine weitere Ausführungsform eines Probenaufgabekopfes.

Fig. 4 zeigt ausschnittweise und im Schnitt eine zusätzliche Ausführungsform eines Probenaufgabekopfes.

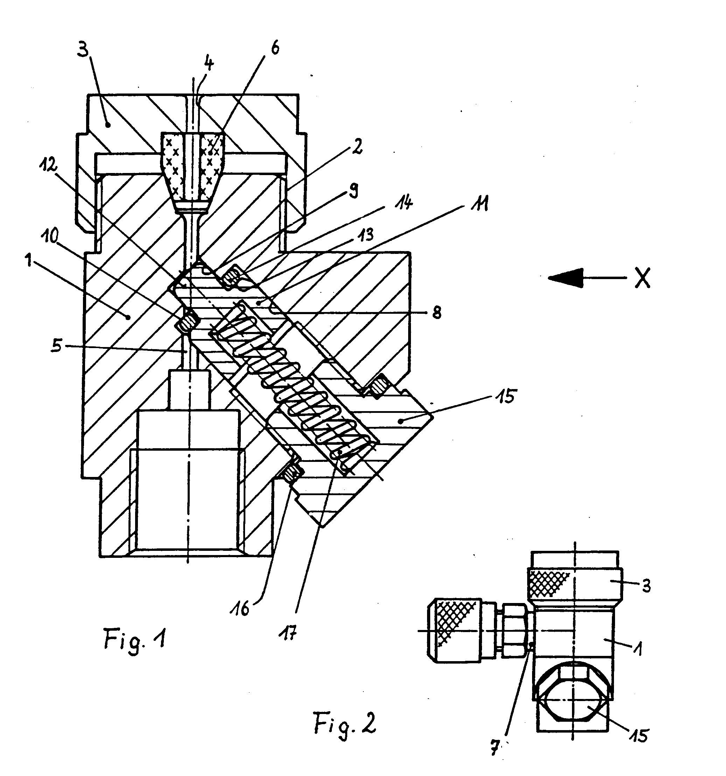

Der in Fig. 1 und 2 dargestellte Probenaufgabekopf 1 besitzt einen Gewindeabschnitt 2, auf den ein Einführungsteil 3 für eine Injektionsnadel geschraubt ist. Das Einführungsteil 3 besitzt eine Bohrung 4, die mit einer Bohrung 5 des Kopfes 1 fluchtet und als Führungsabschnitt für die Injektionsnadel dient. Zwischen dem Einführungsteil 3 und dem Kopf 1 ist zwischen den Bohrungen 4, 5 ein mit einem Durchtrittskanal versehener Dichtungskörper 6 angeordnet, durch den die Injektionsnadel beim Einführen hindurchgeführt wird, wobei sich der Dichtungskörper 6 abdichtend an die Injektionsnadel anlegt, um die Bohrung 5 gegenüber dem Außenraum abzudichten.

Die Bohrung 5 ist in dem dem Einführungsteil 3 gegenüberliegenden Endbereich zur Aufnahme eines Endabschnitts einer Probenaufgabekammer oder einer Flasche oder dergleichen als Stufenbohrung ausgebildet und teilweise mit Gewinde versehen. Außerdem kann der Kopf 1 je nach Verwendungszweck einen Gasanschluß 7 etwa für Trägergas besitzen.

Der Kopf 1 besitzt eine Bohrung 8 in einem Winkel von 135° zur Achse der Bohrung 5 (von oben gesehen), deren äußerer Endabschnitt mit Gewinde versehen ist und sich am gegenüberliegenden Ende in einer zylindrischen Ausnehmung 9 geringeren Durchmessers fortsetzt, wobei die Ausnehmung 9 sich über den Bereich der Bohrung 5 erstreckt und eine ringförmige Anlagefläche 10 zwischen Bohrung 8 und Ausnehmung 9 senkrecht zur Achse der Bohrung 8 ausgebildet wird.

Die Bohrung 8 dient als Führung für einen zylindrischen Ventilkörper 11, der einen koaxialen Fortsatz 12 mit vermindertem Durchmesser trägt, so daß sich eine der Anlagefläche 10 zugewandte und hierzu parallele Ringfläche 13 des Ventilkörpers 11 ergibt. Benachbart zu der Ringfläche 13 trägt der Fortsatz 12 in seinen Fußbereich einen Dichtungsring 14, der durch eine Ringnut gehalten wird und mit dem Dichtungskörper 11 in der Bohrung 8 beweglich ist. Die Bohrung 8 wird außenseitig durch einen als Schraube ausgebildeten Stopfen 15 unter Zwischenschaltung einer Dichtung 16 verschlossen, wobei der Stopfen 15 eine Vorspannfeder 17 für den Ventilkörper 11 aufnimmt. Durch die Vorspannfeder 17 wird in der Schließstellung des Eingabeventils der Dichtungsring 14 zwischen den Flächen 10 und 13 zwecks Abdichtung eingeklemmt, während die Stirnseite des Fortsatzes 12 am Grund der Ausnehmung 9 derart anliegt oder mit geringem Abstand hierzu angeordnet ist, daß die Stirnseite des Fortsatzes 12 den Mündungsbereich der Bohrung 5 in die Ausnehmung 9 vom Einführungsteil 3 her im wesentlichen abdeckt.

Wenn eine Injektionsnadel eingeführt wird, stößt deren Spitze auf die schräg zur Bohrung 5 verlaufende Stirnfläche des Fortsatzes 12 und drückt diesen gegen die Kraft der Vorspannfeder 17 durch Verschieben des Ventilkörpers 11 in der Führung 8 aus dem Bereich der Bohrung 5 heraus, wodurch gleichzeitig die Dichtung 14 aus ihrer Anlage an der Anlagefläche 10 und aus dem Bereich der Bohrung 5 herausbewegt wird. die Abdichtungsfunktion wird währenddessen von dem Dichtungskörper 6 übernommen.

Der Gasanschluß 7 mündet unterhalb der als Dichtfläche wirkenden Ringfläche 13 in der Bohrung 5. Die Gasbeaufschlagung erfolgt beispielsweise zur Zuführung von Trägergas oder zum Rückspülen.

Der Kopf 1, der Ventilkörper 11 und der Stopfen 15 als auch das Einführungsteil 3 können als Kunststoffspritzteile ausgebildet sein. Eine besondere Justierung ist nicht nötig, die einzuhaltenden Toleranzen sind nicht kritisch.

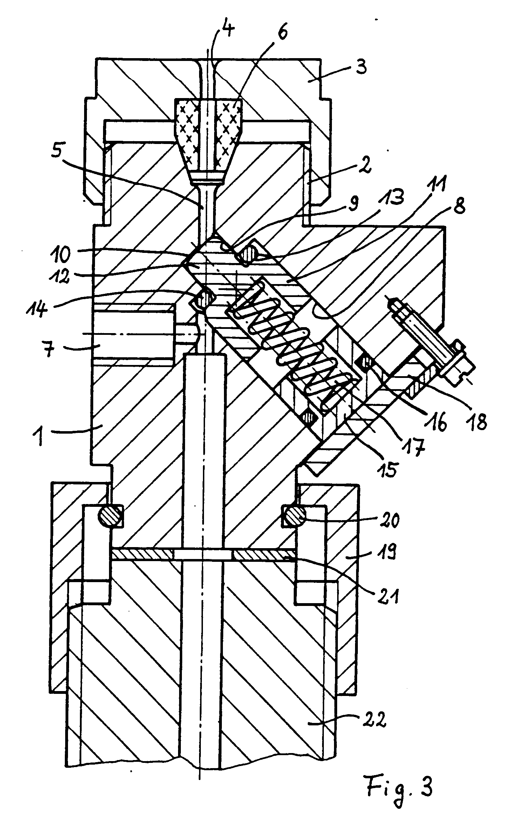

Bei der in Fig. 3 dargestellten Ausführungsform ist die Bohrung 8 nicht mit Gewinde versehen und der Stopfen 15 zusammen mit dem davon getragenen Dichtungsring 16 in die Bohrung 8 eingesetzt und dort mittels einer von außen mit dem Kopf 1 verschraubten Platte 18 gehalten.

Außerdem ist eine Überwurfmutter 19 am unteren Ende des Kopfes 1 vorgesehen, die durch einen Sprengring 20 gehalten wird. Der Kopf 1 wird hierbei unter Zwischenschaltung einer ringförmigen Flachdichtung 21 auf ein damit zu verbindendes Teil 22, etwa eine Vorsäule, einen Behälter, oder dergleichen, geschraubt.

Obwohl die dargestellten Ausführungsbeispiele im Zusammenhang mit der Probenaufgabe bei der Kapillargaschromatographie beschrieben wurden, lassen sie sich auch als Probenentnahmeköpfe, und ferner sowohl für Gas als auch für Flüssigkeit verwenden.

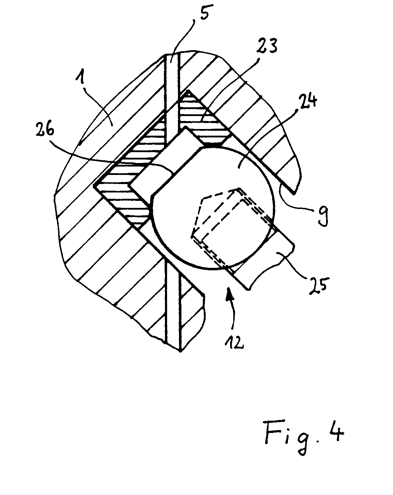

Bei der in Fig. 4 ausschnittweise dargestellten, bei besonderen Korrosionsproblemen zweckmäßigen Ausführungsform ist in der Ausnehmung 9 durch Einschrumpfen ein Einsatz 23 befestigt, der die Form eines Rings mir oder ohne Boden hat. Der Fortsatz 12 das Ventilkörpers 11 umfaßt eine Kugel 24, die über einen Gewindezapfen 25 mit dem Ventilkörper 11 verbunden ist. Die Kugel 24 ist mit einer planen Stirnfläche 26 versehen, die senkrecht zur Bewegungsrichtung des Ventilkörpers 11 verläuft und an der die Injektionsnadel zum Öffnen des Eingabeventils angreift. Die Kugel 24 und der Einsatz 23, erstere an einem gegenüber der Stirnfläche 26 zurückversetzten Ringbereich und letzterer im Bereich der freien Innenkante, sind aufeinander eingeschliffen, um eine entsprechende Dichtung zu bilden. Hierbei ist es zweckmäßig, wenn der Einsatz 23 und die Kugel 24 aus Saphir oder Rubin sind. Die Innenbohrung 5 erstreckt sich durch den Einsatz 23 hindurch.

Die Verwendung von Einsatz 23 und Kugel 24 ist insofern vorteilhaft, als Saphir- oder Rubinkugeln und -ringe, die aufeinander eingeschliffen sind, ohne weiteres erhältlich sind und die Kugeln nur zum Erhalten der Stirnfläche 26 abgeschliffen zu werden brauchen, während ein Fortsatz wie bei der Ausführungsform der Fig. 1 eine spezielle Anfertigung benötigen würde.

**Patentansprüche**

1.  Probenaufgabe- bzw. -entnahmekopf für Gas oder Flüssigkeit, insbesondere für die Gaschromatographie, mit einer Innenbohrung (5) sowie mit einem Eingabeventil, das einen ventilkörper (11) aufweist, der gegen die Innenbohrung (5) abdichtend federvorgespannt, durch die Injektionsnadel zum Öffnen und unter einem Winkel im Bereich von über 90° bis unter 180°, vorzugsweise im Bereich von 120° bis 150°, verschiebbar ist, dadurch **gekennzeichnet,** daß eine Führung (8) für den zylindrisch ausgebildeten Ventilkörper (11) vorgesehen ist, wobei die Führung (8) in einer hierzu koaxialen, sich über den Bereich der Innenbohrung (5) erstrekkenden Ausnehmung (9) des Kopfes (1) mündet und der Ventilkörper (11) einen Fortsatz (12) besitzt, der eine schräg zur Innenbohrung (5) verlaufende Stirnfläche sowie eine ringförmige, gegenüber der Stirnfläche zurückversetzt angeordnete Dichtfläche (13) aufweist und in der Schließstellung des Eingabeventils unter Anlage der ringförmigen Dichtfläche an einer ringförmigen Anlagefläche (10) in die Ausnehmung (9) ragt.

2.  Probenaufgabe- bzw. -entnahmekopf nach Anspruch 1, dadurch gekennzeichnet, daß ein Einführungsteil (3) für eine Injektionsnadel mit einer mit der Innenbohrung (s) fluchtenden Bohrung (4) vorgesehen ist, wobei das Einführungsteil (3) über einen Dichtungskörper (6) mit dem Kopf (1) verbunden ist.

3.  Probenaufgabe- bzw. -entnahmekopf nach Anspruch 1 oder 2, durch gekennzeichnet, daß der Winkel zwischen der Innenbohrung (5) und der Stirnfläche des Fortsatzes (12) in Einstechrichtung der Injektionsnadel gesehen 120° bis 150°, vorzugsweise etwa 135°, beträgt.

4.  Probenaufgabe- bzw. -entnahmekopf nach Anspruch 1 bis 3, dadurch gekennzeichnet, daß die Stirnfläche des Fortsatzes (12) senkrecht zur Achse der Führung (8) verläuft.

5.  Probenaufgabe- bzw. -entnahmekopf nach einem der Ansprüche 1 bis 4, dadurch gekennzeichnet, daß der Kopf (1) und gegebenenfalls der Ventilkörper (11) aus Kunststoff bestehn.

6.  Probenaufgabe- bzw. -entnahmekopf nach einem der Ansprüche 1 bis 5, dadurch gekennzeichnet, daß der Fortsatz (12) Spiel zur Ausnehmung (9) besitzt.

7.  Probenaufgabe- bzw. -entnahmekopf nach einem der Ansprüche 1 bis 6, dadurch gekennzeichnet, daß die Führung (8) nach außen hin einen Gewindeabschnitt aufweist, der durch einen eine den Ventilkörper (11) vorspannende Feder (17) abstützenden Stopfen (15) verschlossen ist.

8.  Probenaufgabe- bzw. -entnahmekopf nach einem der Ansprüche 1 bis 6, dadurch gekennzeichnet, daß ein in die Führung (8) eingesetzter Stopfen (15) von einer Platte (18) abgestützt ist, die von außen am Kopf (1) befestigt ist.

9.  Probenaufgabe- bzw. -entnahmekopf nach einem der Ansprüche 1 bis 8, dadurch gekennzeichnet, daß die Führung (8) im Kopf (1) ausgebildet ist.

10. Probenaufgabe- bzw. -entnahmekopf nach einem der Ansprüche 1 bis 9, dadurch gekennzeichnet, daß der Fortsatz (12) außenumfänglich einen Dichtungsring (14) trägt, der in der Schließstellung des Eingabeventils an der zwischen der Führung (8) und der Ausnehmung (9) ausgebildeten Anlagefläche (10) anliegt.

11. Probenaufgabe- bzw. -entnahmekopf nach einem der Ansprüche 1 bis 10, dadurch gekennzeichnet, daß der Fortsatz (12) zylindrisch ist.

12. Probenaufgabe- bzw. -entnahmekopf nach einem der Ansprüche 1 bis 11, dadurch gekennzeichnet, daß die Ausnehmung (9) einen die ringförmige Anlagefläche (10) aufweisenden Einsatz (23) aufnimmt, in den der Fortsatz (12) in der Schließstellung des Eingabeventils hineinragt.

13. Probenaufgabe- bzw. -entnahmekopf nach Anspruch 12, dadurch gekennzeichnet, daß die Anlagefläche (10) des Einsatzes (23) und die korrespondierende Dichtfläche des Fortsatzes (12) aufeinander eingeschliffen sind.

14. Probenaufgabe- bzw. -entnahmekopf nach Anspruch 12 oder 13, dadurch gekennzeichnet, daß der Fortsatz (12) eine mit einer Stirnfläche (26) versehene Kugel (24) umfaßt.

15. Probenaufgabe- bzw. -entnahmekopf nach einem der Ansprüchen 12 bis 14, dadurch gekennzeichnet, daß der Einsatz (23) und der Fortsatz (12) aus Saphir oder Rubin bestehen.

16. Probenaufgabe- bzw. -entnahmekopf nach einem der Ansprüche 12 bis 15, dadurch gekennzeichnet, daß der Einsatz (23) in den Kopf (1) eingeschrumpft ist.

**Claims**

1. A sample loading and/or extracting bead for gas or liquid, more particularly for gas chromatography, with an internal bore (5) and with an input valve which has a valve member (11) which, spring-biased towards the internal bore (5) to make a seal , can be displaced by the injection needle for opening and at an angle of more than 90° and less than 180°, preferably between 120° and 150°, characterised in that a guide (8) is provided for the valve member (11), which is cylindrical, the guide (8) leads into a recess (9) coaxial with it in the head (1), the recess extending over the area of the internal bore (5), and the valve member (11) has an extension (12) which is provided with both an end face oblique relative to the internal bore (5) and an annular sealing surface (13) set back relative to the end face, and which projects, in the closed position of the input valve, into the recess (9) with its annular sealing surface bearing on an annular bearing surface (10).

2. A sample loading and/or extracting head as claimed in claim 1, characterised in that an entrance portion (3) for an injection needle is provided with a bore (4) in line with the internal bore (5), the entrance portion (3) being connected by way of a sealing member (6) with the head (1).

3. A sample loading and/or extracting head as claimed in claim 1 or 2, characterised in that the angle between the internal bore (5) and the end face of the extension (12) as seen in the direction of penetration of the injection needle is 120° to 150°, preferably approximately 135°.

4. A sample loading and/or extracting head as claimed in any of claims 1 to 3, characterised in that the end face of the extension (12) is perpendicular to the axis of the guide (8).

5. A sample loading and/or extracting head as claimed in any of claims 1 to 4, characterised in that the head (1) and possibly the valve member (11) are of synthetic plastic material.

6. A sample loading and/or extracting head as claimed in any of claims 1 to 5, characterised in that the extension (12) exhibits clearance relative to the recess (9).

7. A sample loading and/or extracting head as claimed in any of claims 1 to 6, characterised in that the guide (8) exhibits towards the exterior a threaded portion which is closed by a plug (15) supported by a spring (17) biasing the valve member (11).

8. A sample loading and/or extracting head as claimed in any of claims 1 to 6, characterised in that a plug (15) inserted in the guide (8) rests on a plate (18) fixed to the head (1) from the exterior.

9. A sample loading and/or extracting head as claimed in any of claims 1 to 8, characterised in that the guide (8) is constructed in the head (1).

10. A sample loading and/or extracting head as claimed in any of claims 1 to 9, characterised in that the extension (12) bears on its outer periphery a sealing ring (14) which in the closed position of the input valve bears on the bearing surface (10) formed between the guide (8) and the recess (9).

11. A sample loading and/or extracting head as claimed in any of claims 1 to 10, characterised in that the extension (12) is cylindrical

12. A sample loading and/or extracting head as claimed in any of claims 1 to 11 , characterised in that the recess (9) receives an insert (23) which exhibits the annular bearing surface (10), and into which the extension (12) projects in the closed position of the input valve.

13. A sample loading and/or extracting head as claimed in claim 12, characterised in that the bearing surface (10) of the insert (23) and the corresponding sealing surface of the extension (12) are ground to fit one another.

14. A sample loading and/or extracting head as claimed in claim 12 or 13, characterised in that the extension (12) comprises a ball (24) provided with an end face (26).

15. A sample loading and/or extracting head as claimed in any of claims 12 to 14, characterised in that the insert (23) and extension (12) are of sapphire or ruby.

16. A sample loading and/or extracting head as claimed in any of claims 12 to 15, characterised in that the insert (23) is shrunk into the head (1).

## Revendications

1. Tête de réception et de prélèvement d'échantillons pour gaz ou liquide, en particulier pour la chromatographie en phase gazeuse, comportant un alésage intérieur (5) ainsi qu'une soupape d'admission qui présente un corps de soupape (11) appliqué sous l'effet d'un ressort de manière étanche contre l'alésage intérieur (5) et qui peut se déplacer sous l'effet d'une aiguille d'injection en vue de l'ouverture et, ce, sous un angle compris entre plus de 90° et moins de 180°, de préférence compris entre 120° et 150°, caractérisée par le fait qu'un guidage (8) est prévu pour le corps de soupape (11) de forme cylindrique, ledit guidage (8) débouchant dans un évidement (9) de la tête (1) co-axial s'étendant dans la zone de l'alésage intérieur (5), tandis que le corps de soupape (11) est pourvu d'un prolongement (12) qui présente une face frontale s'étendant obliquement par rapport audit alésage intérieur (5), ainsi qu'une surface d'étanchéité (13) de forme annulaire, située en retrait par rapport à la face frontale et pénètrant, dans la position de fermeture de la soupape d'admission, dans l'évidement (9), la surface d'étanchéité de forme annulaire venant s'appliquer sur une surface réceptrice de forme annulaire (10).

2. Tête de réception et de prélèvement selon la revendication 1, caractérisée par la prévision d'une pièce d'introduction (3) d'une aiguille d'injection comportant un alésage (4) aligné avec l'alésage intérieur (5), ladite pièce (3) étant reliée à la tête (1) par un corps d'étanchéité (6).

3. Tête de réception et de prélèvement selon la revendication 1 ou 2, caractérisée par le fait que l'angle entre l'alésage intérieur (5) et la face frontale du prolongement (12), vu dans la direction d'introduction de l'aiguille d'injection, est de 120 à 150°, de préférence d'environ 135°.

4. Tête de réception et de prélèvement selon les revendications 1 à 3, caractérisée par le fait que la face frontale du prolongement (12) s'étend perpendiculairement à l'axe du guidage (8).

5. Tête de réception et de prélèvement selon l'une des revendications 1 à 4, caractérisée par le fait que la tête (1) et éventuellement le corps de soupape (11) sont réalisés en matière plastique.

6. Tête de réception et de prélèvement selon l'une des revendication 1 à 5, caractérisée par le fait que le prolongement (12) présente du jeu en direction de l'évidement (9).

7. Tête de réception et de prélèvement selon l'une des revendications 1 à 6, caractérisée par le fait que le guidage (8) présente en direction de l'extérieur une partie taraudée qui est obturée par un bouchon (15) supportant le ressort (17) qui assure la pression initiale sur le corps de soupape (11).

8. Tête de réception et de prélèvement selon l'une des revendications 1 à 6, caractérisée par le fait qu'un bouchon (15) introduit dans le guidage (8) est supporté par une plaque (18) fixée sur la tête (1) extérieurement.

9. Tête de réception et de prélèvement selon l'une des revendications 1 à 8, caractérisée par le fait que le guidage (8) est ménagé dans la tête (1).

10. Tête de réception et de prélèvement selon l'une des revendications 1 à 9, caractérisée par le fait que le prolongement (12) supporte sur son pourtour extérieur une bague d'étanchéité (14) qui, en position de fermeture de la soupape d'admission, s'applique sur la surface réceptrice (10) réalisée entre le guidage (8) et l'évidement (9).

11. Tête de réception et de prélèvement selon l'une des revendications 1 à 10, caractérisée par le fait que le prolongement (12) est cylindrique.

12. Tête de réception et de prélèvement selon l'une des revendications 1 à 11, caractérisée par le fait que l'évidement (9) reçoit un insert (23) muni de la surface réceptrice (10) de forme annulaire, et dans lequel pénètre le prolongement (12) en position de fermeture de la soupape d'admission.

13. Tête de réception et de prélèvement selon la revendication 12, caractérisée par le fait que la surface réceptrice (10) de l'insert (23) et la surface d'étanchéité correspondante du prolongement (12) sont ajustées l'une à l'autre par polissage.

14. Tête de réception et de prélèvement selon la revendication 12 ou 13, caractérisée par le fait que le prolongement (12) comporte une sphère (24) munie d'une face frontale (26).

**15.** Tête de réception et de prélèvement selon l'une des revendications 12 à 14, caractérisée par le fait que l'insert (23) et le prolongement (12) sont réalisés en saphir ou en rubis.

**16.** Tête de réception et de prélèvement selon l'une des revendications 12 à 15, caractérisée par le fait que l'insert (23) est inséré par contraction dans la tête (1).

Fig. 1

Fig. 2

X

Fig. 3

Fig. 4